# EUROPÄISCHE PATENTANMELDUNG

(11) **EP 1 661 466 A1**
(43) Veröffentlichungstag der Anmeldung: **31.05.2006**
(21) Anmeldenummer: 04027915.0
(22) Anmeldetag: 24.11.2004
(51) Int. Cl.: A23G 9/08, A23G 9/22

(54) **Verfahren zum Formen von Speiseeis sowie Form zum Formen von Speiseeis**

(71) Anmelder: Leonhard, Heinz-Joachim, 31139 Hildesheim (DE); Heinrich, Birgit, 31137 Hildesheim (DE)
(72) Erfinder: Leonhard, Heinz-Joachim, 31139 Hildesheim (DE); Heinrich, Birgit, 31137 Hildesheim (DE)
(74) Vertreter: Wagner, Carsten

(57) **Zusammenfassung**

Die Erfindung betrifft ein Verfahren zum Formen von Speiseeis, insbesondere Cremeeis, Fruchteis, Rahmeis, Milchspeiseeis, Eiskrem oder eine beliebige Kombination dieser oder weiterer Speiseeissorten, mit den Schritten:
- Füllen einer Form mit Speiseeis,
- Erwärmen der Form, und
- Entleeren der Form.

Ferner gehört zur Erfindung eine Form zum Formen von Speiseeis, die als Dauerform ausgebildet ist.

## Beschreibung

Die Erfindung betrifft ein Verfahren zum Formen von Speiseeis sowie eine Form zum Formen von Speiseeis. Dabei wird unter Speiseeis, insbesondere Cremeeis, Fruchteis, Rahmeis, Milchspeiseeis, Eiskrem oder eine beliebige Kombination dieser oder weiterer Speiseeissorten verstanden.

Bei der Herstellung von Speiseeis wird eine Rohmasse gleichzeitig gekühlt und gerührt. Das so erhaltene Speiseeis wird dann in Kunststoff-Silikon-Formen eingefüllt. Bei Bedarf kann das fertige Speiseeis aus den Kunststoff-Silikon-Formen herausgenommen werden, beispielsweise mit löffelförmigen Portioniern, mit denen Speiseeis zu Kugeln geformt werden kann.

Jedoch ist es auf diese Weise nicht möglich, Speiseeis in ästhetisch ansprechender Form auf einem Servierteller anzurichten, bei der das zu servierende Speiseeis beispielsweise die Oberflächentopographie eines Kraftfahrzeuges im Spielzeugformat nachzeichnet. Insbesondere gelingt es bei Verwendung einer Form mit einer komplexen Oberflächentopographie wie der eines Kraftfahrzeugs im Spielzeugformat nicht ohne weiteres, das Speiseeis in der gewünschten Form aus der Form zu entnehmen.

Es ist daher Aufgabe der Erfindung, ein Verfahren und eine Form bereitzustellen, mit der sowohl im Rahmen eines normalen Gastronomiebetriebes innerhalb eines Eiscafés als auch im Rahmen einer industriellen Produktion von Speiseeis es möglich ist, Speiseeis in eine ästhetisch ansprechende Form zu bringen.

Die Aufgabe der Erfindung wird durch ein Verfahren nach Patentanspruch 1 sowie durch eine Form nach Patentanspruch 25 gelöst.

Das erfindungsgemäße Verfahren zum Formen von Speiseeis, insbesondere Cremeeis, Fruchteis, Rahmeis, Milchspeiseeis, Eiskrem oder einer beliebigen Kombination dieser oder weiterer Speiseeissorten nach Patentanspruch 1 umfasst die Schritte:
- Füllen einer Form mit Speiseeis
- Erwärmen der Form, und
- Entleeren der Form.

Es wird eine als Dauerform ausgebildete Form mit einer gewünschten Oberflächentopographie, beispielsweise eines Kraftfahrzeuges, verwendet und mit bereits fertiggestelltem Speiseeis aufgefüllt. Der Innenraum der Form ist dabei zum im wesentlichen vollständigen Aufnehmen und Formen von einer Menge Speiseeis in der Größenordnung von zwei bis drei Kugeln (entspricht 200 ml bis 300 ml) ausgebildet. Dabei kann Speiseeis einer Farbe oder verschiedenfarbiges Speiseeis verwendet werden. Bei dem Speiseeis kann es sich um Cremeeis, Fruchteis, Rahmeis, Milchspeiseeis, Eiskrem oder eine beliebige Kombination dieser oder weiterer Speiseeissorten handeln.

In einem nächsten Schritt wird die mit Speiseeis aufgefüllte Form erwärmt, derart, daß das eingefüllte Speiseeis zuerst an den Innenflächen der Form aufschmilzt, sodaß anschließend das so geformte Speiseeis problemlos aus der Form entnommen werden kann.

Dabei kann das Füllen der Form manuell, beispielsweise während des regulären Betriebes in einem Eiscafé erfolgen, sodaß in einem Eiscafé Speiseeis in einer ästhetisch ansprechenden Form serviert werden kann.

In einer alternativen Ausführungsform kann das Füllen der Form maschinell erfolgen, sodaß es auch in einem industriellen Fertigungsprozeß von Speiseeis möglich ist, Speiseeis in eine ästhetisch ansprechende Form zu bringen.

In einer bervorzugten Ausführungsform ist vorgesehen, daß das Erwärmen der Form mit warmem Wasser erfolgt. Dabei wird bevorzugt Wasser mit einer Temperatur von 15°C bis 35°C verwendet, wobei das warme Wasser entweder über Außenflächen der Form strömt oder die Form teilweise in das warme Wasser eingetaucht wird.

In einer weiteren Ausführungsform ist vorgesehen, daß das Erwärmen der Form mittels Infrarotstrahlung erfolgt, sodaß das Erwärmen der Form beispielsweise auch in einer Produktionsanlage zur Herstellung und Formung von Speiseeis verwendet werden kann.

Alternativ hierzu kann das Erwärmen der Form auch mittels Heißluft erfolgen. Ferner kann das Erwärmen der Form auch mittels elektromagnetischer Wellen erfolgen.

Vorzugweise ist vorgesehen, daß das Entleeren der Form manuell erfolgt, sodaß das erfindungsgemäße Verfahren problemlos ohne technische Hilfsmittel in einem Eiscafé durchgeführt werden kann.

In einer alternativen Ausführungsform jedoch ist vorgesehen, daß das Entleeren maschinell erfolgt, sodaß das Formen von Speiseeis in eine ästhetisch ansprechende Form in einer Produktionsanlage für Speiseeis automatisch durchgeführt werden kann.

Vorzugsweise ist vorgesehen, daß das Entleeren der Form durch Stürzen erfolgt, bei dem die Form auf eine ebene Auflagefläche mit ihrer Unterseite aufgesetzt wird. So ist auf einfache Art und Weise ein Entleeren der Form ohne weitere mechanische oder maschinelle Hilfsmittel möglich.

In einer bevorzugten Ausführungsform ist vorgesehen, daß eine Dauerform verwendet wird, mit der mehrmals nacheinander Speiseeis geformt werden kann und nicht für jede zu formende Portion Speiseeis eine neue Form verwendet werden muss.

In einer weiteren Ausführungsform ist vorgesehen, daß eine Entleerungshilfsmittel aufweisende Form verwendet wird, wobei die Entleerungshilfsmittel bewirken, daß auch bei Verwendung einer Form mit einer komplexen Oberflächentopographie wie der eines Kraftfahrzeuges im Spielzeugformat das Speiseeis aus der Form entnommen werden kann, ohne daß die gewünschte Form verlorengeht. Dabei kann es sich bei den Entleerungshilfsmitteln um Antihaftbeschichtungen handeln, wie beispielsweise Teflon, das bei 400°C bis 500°C eingebrannt wird.

Vorzugsweise ist jedoch vorgesehen, daß die Entleerungshilfsmittel derart ausgebildet sind, daß sie eine im wesentlichen gleichmäßige Erwärmung von Speiseeis zuerst an der Innenfläche der Form gewährleisten. So wird erreicht, daß das Speiseeis an der Grenzfläche zur Innenfläche der Form zuerst aufschmilzt und problemlos entnommen werden kann, ohne daß die gewünschte Form des Speiseeises verlorengeht.

In einer bevorzugten Ausführungsform ist vorgegeben, daß eine Form aus einem Material verwendet wird, das eine Wärmeleitfähigkeit von 50 W/mk bis 500 W/mk, vorzugsweise von 200 W/mk bis 250 W/mk aufweist.

In einer Ausführungsform ist dabei vorgesehen, daß eine aus Metall oder einer Metalllegierung gefertigte Form verwendet wird, beispielsweise aus V2A-Stahl. Vorzugsweise ist jedoch vorgesehen, daß als Material Aluminium oder eine Aluminiumlegierung verwendet wird. Dabei weisen Aluminium oder Aluminiumlegierungen den Vorteil auf, daß sie eine hohe Wärmeleitfähigkeit besitzen, sodaß das Erwärmen der Oberfläche des Speiseeises in der Form schnell erfolgt und Speiseeis in der gewünschten Form entnommen werden kann. Ferner sind Aluminium oder Aluminiumlegierungen einfach zu verarbeiten und stehen preiswert zur Verfügung.

Vorzugsweise ist vorgesehen, daß die Form gekugelt ist, d. h., die fertige Form wurde in einen mit Kugeln gefüllten Behälter gegeben und anschließend mit Schwingungen im Ultraschallbereich beaufschlagt, um die Oberfläche der Form zu veredeln, sodaß die Form selbst eine ästhetische Oberfläche aufweist. Ferner wurde die Form poliert.

In einer bevorzugten Ausführungsform ist vorgesehen, daß eine einstückig ausgebildete Form verwendet wird, sodaß die Form einen einfachen Aufbau aufweist und es insbesondere nicht an Verbindungskanten einer mehrteiligen Form zu anhaltenden Verschmutzungen kommt, beispielsweise, weil diese Verbindungskanten schwer zu reinigen sind.

In einer bevorzugten Ausführungsform ist vorgesehen, daß eine hinterschneidungsfreie Form verwendet wird, sodaß Speiseeis in einer gewünschten Form problemlos aus einer einstückigen Form entnommen werden kann.

In einer bevorzugten Ausführungsform ist vorgesehen, daß eine Form aus einem lebensmittelechtem Material verwendet wird, beispielsweise lebensmittelechtes ALMG5 Aluminium, sodaß bei Gebrauch der Form es zu keiner Verunreinigung des Speiseeises, beipielsweise durch Farbstoffe oder Weichmacher, kommt.

Vorzugsweise ist vorgesehen, daß eine Form mit einer Wandstärke von 1 mm bis 5 mm, vorzugsweise 2 mm bis 3 mm verwendet wird. Dabei ist die Form derart ausgebildet, daß die Wandstärke in allen Bereichen der Form im wesentlichen gleich stark ist, sodaß ein gleichmäßiges Erwärmen und damit Auftauen des Speiseeises in der Form gewährleistet ist.

In einer weiteren Ausführungsform ist vorgesehen, daß eine zum Stürzen ausgebildete Form verwendet wird, sodaß ohne mechanische oder maschinelle Hilfsmittel das Speiseeis aus der Form entnommen werden kann. Dabei weist die Form im Querschnitt ein im wesentlichen trapezförmiges Profil mit einer sich in Stürzrichtung vergrößernden Weite auf.

Alternativ hierzu ist vorgesehen, daß eine topfkuchenförmig ausgebildete Form verwendet wird, die einen zentral angeordneten Durchgang aufweist.

In einer bevorzugten Ausführungsform ist vorgesehen, daß eine Form verwendet wird, die die Oberflächentopographie eines Kraftfahrzeuges, insbesondere eines Motorsportkraftfahrzeuges, insbesondere eines Formel-1-Rennwagens nachzeichnet. Durch Verwenden einer derartigen Form ist möglich, Speiseeis in eine Form zu bringen, die von Gestalt und Größe der eines Spielzeug-Kraftfahrzeuges, insbesondere Spielzeug-Motorsportkraftfahrzeuges, insbesondere eine Spielzeug-Formel-1-Rennwagens gleicht, sodaß das Speiseeis in einer optisch ansprechenden Form bereit gestellt ist.

Ferner gehört zur Lösung der Aufgabe eine Form zum Formen von Speiseeis, insbesondere Cremeeis, Fruchteis, Rahmeis, Milchspeiseeis, Eiskrem oder eine beliebige Kombination dieser oder weiterer Speiseeissorten mit den Merkmalen des Patentanspruchs 25.

Die erfindungsgemäße Form ist als Dauerform ausgebildet, sodaß sie mehrmals hintereinander zum Formen mehrerer Portionen Speiseeis verwendet werden kann.

Die Form weist einen Innenraum auf, in der zwei bis drei Kugeln Speiseeis (entspricht 200 ml bis 300 ml) aufgenommen werden können, wobei aus dem Innenraum vorstehendes Speiseeis mit Hilfe eines Spachtels enfernt wird, sodaß nur der Innenraum der Form mit Speiseeis gefüllt ist.

Die Form zum Formen von Speiseeis unterscheidet sich von den eingangs erwähnten Portionierern dadurch, daß bei Portionierern lediglich ein Teil des zu formenden Speiseeises in einem Formabschnitt aufgenommen werden kann, während in der Form zum Formen von Speeiseeis das zu formende Speiseeis im wesentlichen vollständig aufgenommen werden kann.

Dabei weist die Form vorzugsweise Entleerungshilfsmittel auf. Wenn die gewünschte Form des Speiseeises eine komplizierte Oberflächentopographie wie die Gestalt eines Kraftfahrzeuges aufweist, ist eine große Oberfläche gegeben, an der das in die Form eingefüllte Speiseeis anhaftet und damit das Entleeren der Form nahezu unmöglich macht. Durch Entleerungsmittel jedoch wird gewährleistet, daß auch bei komplizierten Oberflächentopographien eine problemlose Entleerung der Form möglich ist.

Derartige Entleerungshilfsmittel können Antihaftbeschichtungen sein, wie beispielsweise Teflon, das bei 400°C bis 500°C eingebrannt wird. Bevorzugter Weise ist jedoch vorgesehen, daß die Entleerungshilfsmittel derart ausgebildet sind, daß sie eine im wesentlichen gleichmäßige Erwärmung von Speiseeis zuerst an Innenflächen der Form bewirken. So wird zuerst das Speiseeis an der Grenzfläche zu der Innenfläche der Form aufgeschmolzen, sodaß problemlos das geformte Speiseeis aus der Form entnommen werden kann, bespielsweise durch Stürzen.

Eine bevorzugte Ausführungsform ist, daß die Form aus einem Material gefertigt ist, das eine Wärmeleitfähigkeit von 50 W/mk bis 500 W/mk, vorzugsweise von 200 W/mk bis 250 W/mk aufweist, sodaß durch die hohe Wärmeleitfähigkeit des Materials der Form gewährleistet ist, daß das in der Form befindliche Speiseeis sich im Bereich der Grenzfläche zur Form zuerst aufschmilzt.

Derartige Wärmeleitfähigkeiten weist eine Form aus Metall oder einer Metalllegierung auf, wobei vorzugsweise als Material Aluminium oder eine Aluminiumlegierung verwendet wird.

Dabei ist in einer bevorzugten Ausführungsform vorgesehen, daß das Material gekugelt ist, d. h., das Material wurde in einem mit Kugeln gefüllten Behälter Schwingungen im Ultraschallbereich ausgesetzt und so die Oberfläche veredelt. Ferner wurde das Material poliert.

Vorzugsweise ist die Form einstückig ausgebildet, sodaß sie besonders einfach zu handhaben und zu reinigen ist.

Dabei ist die Form hinterschneidungsfrei ausgebildet, sodaß problemlos das geformte Speiseeis aus der Form durch Stürzen entnommen werden kann.

In einer weiteren Ausführungsform ist vorgesehen, daß das Material der Form lebensmittelecht ist, d. h., das Material der Form gibt keine Farbstoffe oder Weichmacher oder dergleichen an das Speiseeis ab. Ein lebensmittelechtes Material ist beispielsweise ALMG5 Aluminium.

In einer weiteren bevorzugten Ausführungsform ist vorgesehen, daß die Wandstärke der Form 1 mm bis 5 mm vorzugsweise 2 mm bis 3 mm beträgt; sodaß durch die gewählte Wandstärke eine gleichmäßige Erwärmung der Form gewährleistet ist. Dabei ist die Form derart ausgebildet, daß die Wandstärke der Form in allen Abschnitten der Form im wesentlichen konstant ist, um eine gleichmäßige Erwärmung zu gewährleisten.

Vorzugsweise ist vorgesehen, daß die Form zum Stürzen ausgebildet ist. Dabei weist die Form einen im wesentlichen trapezförmigen Querschnitt auf, bei dem sich die Form in Stürzrichtung zunehmend öffnet, sodaß nach dem Anschmelzen das in der Form befindliche geformte Speiseeis problemlos von der Form durch Stürzen getrennt werden kann.

In einer weiteren bevorzugten Ausführungsform ist vorgesehen, daß die Form die Oberflächentopographie von einem Kraftfahrzeug, insbesondere Motorsportkraftfahrzeug, insbesondere Formel-1-Rennwagen nachzeichnet, wobei die Form Abmessungen im Spielzeugformat aufweist, sodaß es mit der Form möglich ist, eine Speiseeismenge in der Größenordnung von zwei bis drei Kugeln Speiseeis (entspricht 200 ml bis 300 ml) in die ästhetisch ansprechende Form eines Formel-1-Rennwagens im Spielzeugformat zu bringen.

Alternativ ist hierzu vorgesehen, eine Form mit der Gestalt eines Topfkuchens zu verwenden, um die oben genannte Menge von zwei bis drei Kugeln Speiseeis in die Form eines Topfkuchens zu bringen.

Des weiteren gehört zur Erfindung ein Kraftfahrzeugmodell, das wenigstens teilweise hohl und wenigstens teilweise einseitig offen ausgebildet ist und eine Eisform, insbesondere Dauerform, bildet. Dabei stellt das Kraftfahrzeugmodell vorzugsweise ein Motorsportkraftfahrzeug, insbesondere einen Formel-1-Renn-wagen dar. Durch die hohle Ausbildung mit einer einseitigen offenen Ausgestaltung weist das Kraftfahrzeugmodell einen Innenraum auf, in den eine Speiseeismenge in einer Größenordnung von 2 bis 3 Kugeln Speiseeis (entspricht 200 ml bis 300 ml) eingebracht werden kann. Ferner kann das Kraftfahrzeugmodell einen oder eine beliebige Kombination von Merkmalen einer Form nach einem der Ansprüche 25 bis 37 aufweisen.

Ferner gehört zur Erfindung Speiseeis, insbesondere Cremeeis, Fruchteis, Rahmeis, Milchspeiseeis, Eiskrem oder eine beliebige Kombination dieser oder weiterer Speiseeissorten, das nach dem erfindungsgemäßen Verfahren nach einem im Patentanspruch 1 bis 23 geformt wurde sowie die Verwendung einer Form nach einem der Ansprüche 24 bis 36 zum Formen von Speiseeis, insbesondere Cremeeis, Fruchteis, Rahmeis, Milchspeiseeis, Eiskrem oder eine beliebige Kombination dieser oder weiterer Speiseeissorten. Des weiteren gehört zur Erfindung die Verwendung eines Kraftfahrzeugmodells, insbesondere nach Anspruch 38 zum Formen von Speiseeis, insbesondere Cremeeis, Fruchteis, Rahmeis, Milchspeiseeis, Eiskrem oder eine beliebige Kombination dieser oder weiterer Speiseeissorten.

Im Folgenden wird das erfindungsgemäße Verfahren und die erfindungsgemäße Form anhand einer Zeichnung erläutert. Es zeigen:

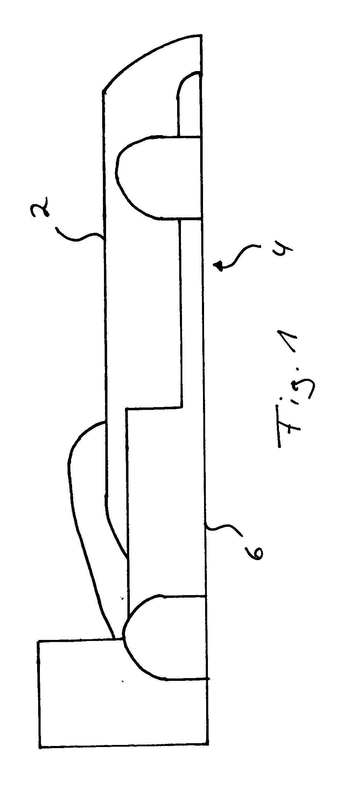

- Fig. 1: eine Seitenansicht einer erfindungsgemäßen Form, und
- Fig. 2: eine Vorderansicht einer erfindungsgemäßen Form
Es wird auf Fig. 1 und Fig. 2 Bezug genommen.

Die Form 2 ist als Dauerform ausgebildet und weist eine Oberflächentopographie auf, die die Gestalt eines Formel-1-Rennwagens im Spielzeugformat nachzeichnet, wobei der Innenraum 4 der Form 2 zur Aufnahme und Formen von zwei bis drei Kugeln (entspricht 200 ml bis 300 ml) Speiseeis ausgebildet ist. Diese Form 2 ist einstückig aus lebensmittelechtem ALMG5 Aluminium gefertigt, sodaß es bei Verwendung der Form 2 zu keiner Verschmutzung des in die Form 2 eingefüllten Speiseeises mit Farbstoffen oder Weichmachern kommt. Ferner wurde die Form 2 in einen mit Kugeln aufgefüllten Behälter unter Beaufschlagung von Ultraschallschwingungen gekugelt und poliert, um der Oberfläche der Form 2 eine ästhetisch ansprechende Erscheinung zu verleihen. Dabei ist die Form 2 hinterschneidungsfrei ausgebildet, sodaß in den Innenraum 4 der Form 2 eingefülltes Speiseeis problemlos entnommen werden kann.

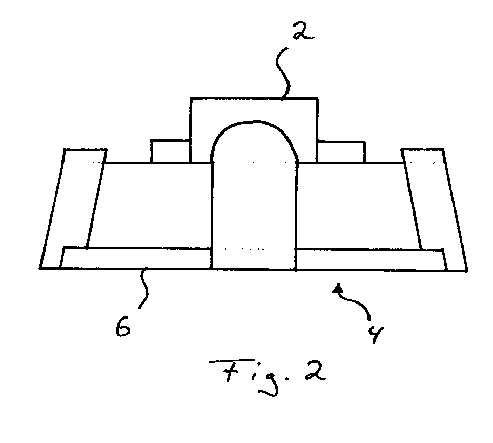

Die Wandstärke der Form 2 beträgt ca. 2mm bis 3mm, wobei die Form 2 derart ausgebildet ist, daß im gesamten Bereich der Form 2 die Wandstärke im wesentlichen konstant ist. Ferner ist die Form 2 zum Stürzen ausgebildet, wobei die Form 2 im Querschnitt im wesentlichen trapezförmig ausgebildet ist (siehe Fig. 2), sodaß die Form 2 sich in Stürzrichtung zunehmend öffnet.

Im Folgenden wird das erfindungsgemäße Verfahren zum Formen von Speiseeis in einem Eiscafé und im Rahmen der industriellen Herstellung in einer Produktionsanlage von Speiseeis erläutert.

In einem Eiscafé wird der Innenraum 4 einer oben beschriebenen Form 2 mit bereits fertiggestelltem Speiseeis, beispielsweise Milchspeiseeis in der Größenordnung von 2 bis 3 Kugeln Speiseeis (entspricht ca. 200 ml bis 300 ml) mit einem geeigneten Mittel, beispielsweise einem Spachtel, aufgefüllt und die Unterseite 6 der Form 2 glattgestrichen, sodaß der Innenraum 4 der Form 2 aufgefüllt ist und eine ebene Aufsatzfläche zum Stürzen gegeben ist. Anschließend wird die mit Speiseeis aufgefüllte Form 2 unter 15°C bis 35°C warmem, fließendem Wasser oder durch teilweises Eintauchen in ein Wasserbad gleicher Temperatur erwärmt. Dabei bewirkt die im wesentlichen konstante Wandstärke der Form 2, daß sich unabhängig von der Oberflächentopographie das Speiseeis an der Grenzfläche zur Oberfläche am Innenraum 4 der Form 2 gleichmäßig erwärmt und aufschmilzt.

In einem nächsten Schritt wird die Form 2 durch Stürzen auf einen Servierteller entleert, wobei das im wesentlichen trapezförmige Profil im Querschnitt das Entleeren der Form 2 durch Stürzen vereinfacht, da durch dieses Profil mit einer sich in Stürzrichtung vergrößernden Öffnung das Entleeren der Form 2 durch Stürzen vereinfacht wird. Anschließend kann das Speiseeis in Form eines Formel-1-Rennwagens dekoriert und verziert werden, bevor es serviert wird.

Anstelle der oben beschriebenen Form 2 kann auch zum Formen von Speiseeis ein Kraftfahrzeugmodell verwendet werden, das beispielsweise einen Formel - 1 - Renn- wagen nachbildet. Dabei ist das Kraftfahrzeugmodell wenigstens teilweise hohl und wenigstens einseitig offen ausgebildet, sodaß das Kraftfahrzeugmodell einen Innenraum aufweist, der mit Speiseeis gefüllt werden kann, sodaß das Kraftfahrzeugmodell als Eisform, insbesondere Dauerform verwendet werden kann.

Es wird nun das Verfahren von Speiseeis, insbesondere von Milchspeiseeis, in einer Produktionsanlage zur Herstellung von Speiseeis, erläutert.

Es werden eine Vielzahl von oben beschriebenen Formen 2 verwendet, die nacheinander maschinell mit bereits hergestellten Speiseeis gefüllt werden, wobei nach dem Auffüllen sichergestellt wird, daß die Unterseite der Form eine ebene Fläche aufweist, beispielsweise durch Glattstreichen.

Anschließend werden die befüllten Formen 2 erwärmt, in dem sie teilweise durch ein Wasserbad mit einer Temperatur von 15°C bis 35°C geführt werden. Alternativ kann die Erwärmung der Form 2 auch mittels Infrarotstrahlung, mittels Heißluft oder elektromagnetischer Strahlung erfolgen. Ferner kann vorgesehen werden, daß die Form 2 eine Heizeinrichtung aufweist, mit der sie nach dem Befüllen erwärmt werden kann.

In einem nächsten Schritt erfolgt das Entleeren der Formen 2 maschinell, wobei die Formen auf Transportbändern oder Verpackungsmaterial gestürzt werden. Anschließend kann das so geformte Speiseeis weiter verpackt werden, beispielsweise in Folie eingeschweißt und in eine Packkartonverpackung gebracht werden, sodaß es transportfertig zur Verfügung steht.

## Patentansprüche

1. Verfahren zum Formen von Speiseeis, insbesondere Cremeeis, Fruchteis, Rahmeis, Milchspeiseeis, Eiskrem oder eine beliebige Kombination dieser oder weiterer Speiseeissorten, mit den Schritten:
- Füllen einer Form (2) mit Speiseeis,
- Erwärmen der Form (2) und
- Entleeren der Form (2).

2. Verfahren nach Anspruch 1, **dadurch gekennzeichnet, daß** das Füllen der Form (2) manuell erfolgt.

3. Verfahren nach Anspruch 1, **dadurch gekennzeichnet, daß** das Füllen der Form (2) maschinell erfolgt.

4. Verfahren nach einem der vorhergehenden Ansprüche, **dadurch gekennzeichnet, daß** das Erwärmen der Form (2) mit warmen Wasser erfolgt.

5. Verfahren nach einem der Ansprüche 1 bis 3, **dadurch gekennzeichnet, daß** das Erwärmen der Form (2) mittels Infrarotstrahlung erfolgt.

6. Verfahren nach einem der Ansprüche 1 bis 3, **dadurch gekennzeichnet, daß** das Erwärmen der Form (2) mittels Heißluft erfolgt.

7. Verfahren nach einem der Ansprüche 1 bis 3, **dadurch gekennzeichnet, daß** das Erwärmen der Form (2) mittels elektromagnetischer Wellen erfolgt.

8. Verfahren nach einem der vorhergehenden Ansprüche, **dadurch gekennzeichnet, daß** das Entleeren der Form (2) manuell erfolgt.

9. Verfahren nach einem der Ansprüche 1 bis 7, **dadurch** gekennzeichet, daß das Entleeren der Form (2) maschinell erfolgt.

10. Verfahren nach Anspruch 8 oder 9, **dadurch gekennzeichnet, daß** das Entleeren der Form (2) durch Stürzen erfolgt.

11. Verfahren nach einem der vorherigen Ansprüche, **dadurch gekennzeichnet, daß** eine Dauerform verwendet wird.

12. Verfahren nach einem der vorherigen Ansprüche, **dadurch gekennzeichnet, daß** eine Entleerungshilfsmittel aufweisende Form verwendet wird.

13. Verfahren nach Anspruch 12, **dadurch gekennzeichnet, daß** die Entleerungshilfsmittel eine im wesentlichen gleichmäßige Erwärmung von Speiseeis zuerst an den Innenflächen der Form gewährleisten.

14. Verfahren nach einem der vorhergehenden Ansprüche, **dadurch gekennzeichnet, daß** eine Form (2) aus einem Material verwendet wird, das eine Wärmeleitfähigkeit von 50 W/mk bis 500 W/mk, vorzugsweise von 200 W/mk bis 250 W/mk aufweist.

15. Verfahren nach einem der vorhergehenden Ansprüche, **dadurch gekennzeichnet, daß** eine aus Metall oder einer Metalllegierung gefertigte Form (2) verwendet wird.

16. Verfahren nach Anspruch 13, **dadurch gekennzeichnet, daß** als Material Aluminium oder eine Aluminiumlegierung verwendet wird.

17. Verfahren nach Anspruch 15 oder 16, **dadurch gekennzeichnet, daß** die Form (2) gekugelt ist.

18. Verfahren nach einem der vorhergehenden Ansprüche, **dadurch gekennzeichnet, daß** eine einstückig ausgebildete Form (2) verwendet wird.

19. Verfahren nach einem der vorhergehenden Ansprüche, **dadurch gekennzeichnet, daß** eine hinterschneidungsfreie Form (2) verwendet wird.

20. Verfahren nach einem der vorhergehenden Ansprüche, **dadurch gekennzeichnet, daß** eine Form (2) aus einem lebensmittelechten Material verwendet wird.

21. Verfahren nach einem der vorhergehenden Ansprüche, **dadurch gekennzeichnet, daß** eine Form (2) mit einer Wandstärke von 1 mm bis 5 mm, vorzugsweise 2 mm bis 3 mm verwendet wird.

22. Verfahren nach einem der Ansprüche 10 bis 21, **dadurch gekennzeichnet, daß** eine zum Stürzen ausgebildete Form (2) verwendet wird.

23. Verfahren nach einem der vorhergehenden Ansprüche, **dadurch gekennzeichnet, daß** eine topfkuchenförmig ausgebildete Form (2) verwendet wird.

24. Verfahren nach einem der Ansprüche 1 bis 22, **dadurch gekennzeichnet, daß** eine Form (2) verwendet wird, die die Oberflächentopographie eines Kraftfahrzeuges, insbesondere eines Motorsportkraftfahrzeuges, insbesondere eines Formel-1-Rennwagens nachzeichnet.

25. Form (2) zum Formen von Speiseeis, insbesondere Cremeeis, Fruchteis, Rahmeis, Milchspeiseeis, Eiskrem oder eine beliebige Kombination dieser oder weiterer Speiseeissorten, **dadurch gekennzeichnet, daß** die Form als Dauerform ausgebildet ist.

26. Form (2) zum Formen von Speiseeis, insbesondere nach Anspruch 25, **dadurch gekennzeichnet, daß** die Form (2) Entleerungshilfsmittel aufweist.

27. Form (2) nach Anspruch 25 oder 26, **dadurch gekennzeichnet, daß** die Entleerungshilfsmittel derart ausgebildet sind, daß sie eine im wesentlichen gleichmäßige Erwärmung von Speiseeis zuerst an Innenflächen der Form (2) gewähr-leisten.

28. Form (2) nach einem der Ansprüche 25 bis 27, **dadurch gekennzeichnet, daß** die Form (2) aus einem Material gefertigt ist, das eine Wärmeleitfähigkeit von 50 W/mk bis 500 W/mk, vorzugsweise von 200 W/mk bis 250 W/mk aufweist.

29. Form (2) nach einem der Ansprüche 25 bis 28, **dadurch gekennzeichnet, daß** die Form (2) aus Metall oder einer Metalllegierung gefertigt ist.

30. Form (2) nach Anspruch 29, **dadurch gekennzeichnet, daß** das Material Aluminium oder eine Aluminiumlegierung ist.

31. Form (2) nach Anspruch 29 oder 30, **dadurch gekennzeichnet, daß** das Material gekugelt ist.

32. Form (2) nach einem der Ansprüche 25 bis 31, **dadurch gekennzeichnet, daß** die Form (2) einstückig ausgebildet ist.

33. Form (2) nach einem der Ansprüche 25 bis 32, **dadurch gekennzeichnet, daß** die Form (2) hinterschneidungsfrei ausgebildet ist.

34. Form (2) nach einem der Ansprüche 25 bis 33, **dadurch gekennzeichnet, daß** das Material der Form (2) lebensmittelecht ist.

35. Form (2) nach einem der Ansprüche 25 bis 34, **dadurch gekennzeichnet, daß** die Wandstärke der Form (2) 1 mm bis 5 mm, vorzugsweise 2 mm bis 3 mm beträgt.

36. Form (2) nach einem der Ansprüche 25 bis 35, **dadurch gekennzeichnet, daß** die Form (2) zum Stürzen ausgebildet ist.

37. Form (2) nach einem der Ansprüche 25 bis 36, **dadurch gekennzeichnet, daß** die Form (2) die Oberflächentopographie von einem Kraftfahrzeug, insbesondere Motorsportkraftfahrzeug, insbesondere Formel-1-Rennwagen nachzeichnet.

38. Form (2) nach einem der Ansprüche 25 bis 37, **dadurch gekennzeichnet, daß** die Form (2) die Gestalt einer Topfkuchenform aufweist.

39. Kraftfahrzeugmodell, das wenigstens teilweise hohl und wenigstens einseitig offen ausgebildet ist, und eine Eisform, insbesondere Dauerform, bildet.

40. Speiseeis, insbesondere Cremeeis, Fruchteis, Rahmeis, Milchspeiseeis, Eiskrem oder eine beliebige Kombination dieser oder weiterer Speiseeissorten, **dadurch gekennzeichnet, daß** es nach einem der Verfahren nach Anspruch 1 bis 24 geformt wurde.

41. Verwendung einer Form nach einem der Ansprüche 25 bis 38 zum Formen von Speiseeis, insbesondere Cremeeis, Fruchteis, Rahmeis, Milchspeiseeis, Eiskrem oder eine beliebige Kombination dieser oder weiterer Speiseeissorten.

42. Verwendung eines Kraftfahrzeugmodells, insbesondere nach Anspruch 38, zum Formen von Speiseeis, insbesondere Cremeeis, Fruchteis, Rahmeis, Milchspeiseeis, Eiskrem oder eine beliebige Kombination dieser oder weiterer Speiseeissorten.
